# EUROPÄISCHE PATENTSCHRIFT

(11) **EP 1 849 970 B1**
(45) Veröffentlichungstag und Bekanntmachung des Hinweises auf die Patenterteilung: **18.01.2012**
(21) Anmeldenummer: 07008585.7
(22) Anmeldetag: 27.04.2007
(51) Int. Cl.: F01N 3/033, F01N 11/00

(54) **Vorrichtung und Verfahren zur Überwachung der Funktionsfähigkeit eines Partikelfilters**
Device and method for monitoring the functionality of a particulate filter
Dispositif et procédé destinés à la surveillance de la capacité fonctionnelle d'un filtre à particules

(30) Priorität: 28.04.2006 DE 102006019783
(43) Veröffentlichungstag der Anmeldung: 31.10.2007
(73) Patentinhaber: Daimler AG, 70327 Stuttgart (DE)
(72) Erfinder: Busch, Michael-Rainer, 73061 Ebersbach (DE); Gund, Gerd, Dr., 89150 Laichingen (DE)
(74) Vertreter: Moore, Derek

(56) Entgegenhaltungen:
- EP-A1- 1 106 797
- WO-A1-03/091553
- DE-A1- 10 209 755
- DE-C1- 4 139 325

## Beschreibung

Die Erfindung betrifft eine Vorrichtung und ein Verfahren zur Überwachung der Funktionsfähigkeit eines in einem Abgasstrang einer Brennkraftmaschine angeordneten Partikelfilters.

Aus der DE 41 39 325 ist ein Verfahren zur Überwachung der Funktionsfähigkeit eines in einem Abgasstrang einer Brennkraftmaschine angeordneten Partikelfilters bekannt, bei welchem ein Sensor stromab eines Partikelfilters eingesetzt wird. Der Sensor wird von Zeit zu Zeit von darauf abgelagerten Rußpartikeln freigebrannt. Ist eine vergleichsweise großen Menge von Rußpartikeln auf dem Sensor abgelagert, so deutet dies auf einen Partikelfilter hin, dessen Filterwirksamkeit vermindert ist. Erkannt wird dies anhand der erforderlichen Zeit zum Freibrennen der auf dem Sensor ablagerten Rußpartikel, welche in diesem Fall vergleichsweise lang ist.

Aus der WO 03/091553 ist eine alternative Vorrichtung bekannt.

Es ist jedoch schwierig, gleichbleibende Freibrennbedingungen zu schaffen. Zudem korreliert die Freibrenndauer nicht immer in der gewünschten Genauigkeit mit der Menge der abgelagerten Partikel. Zudem sind für die Vorrichtung elektrische Zuleitungen zum Sensor erforderlich, was aufwändig ist, da der Sensor im Abgasstrom angeordnet ist.

Aufgabe der Erfindung ist es, eine Vorrichtung und ein Verfahren bereitzustellen, mit denen auf einfache Weise eine zuverlässige Funktionsprüfung eines Partikelfilters ermöglicht ist.

Diese Aufgabe wird durch eine Vorrichtung mit den Merkmalen des Anspruchs 1 und durch ein Verfahren mit den Merkmalen des Anspruchs 8 gelöst.

Die erfindungsgemäße Vorrichtung umfasst charakterischerweise ein Filterelement, welches in Abgasströmungsrichtung stromab des Partikelfilters im Abgasstrang angeordnet ist und von aus dem Partikelfilter ausströmendem Abgas durchströmt werden kann. Ferner sind erfindungsgemäß Beladungserfassungsmittel zur Erfassung einer Partikelbeladung des Filterelements vorgesehen.

Der Partikelfilter weist vorzugsweise einen hohen Partikel-Abscheidegrad von typischerweise mehr als 99 % auf, so dass stromab des intakten Partikelfilters das Abgas einen sehr niedrigen Partikelgehalt aufweist. Bei einer Funktionsstörung des Partikelfilters, beispielsweise infolge eines Defekts durch Rissbildung, vermindert sich dessen Filterwirkung und das aus dem Partikelfilter ausströmende Abgas enthält vermehrt Partikel, welche jedoch vom nachgeschalteten Filterelement ausgefiltert werden. Dadurch belädt sich das Filterelement verstärkt mit Partikeln, was mit Hilfe der erfindungsgemäß vorgesehenen Beladungserfassungsmittel festgestellt werden kann. Somit kann auf einfache und zuverlässige Weise eine Funktionsüberprüfung bzw. Überwachung des Partikelfilters erfolgen. Wird beispielsweise durch die Beladungserfassungsmittel ein langsamer Anstieg bzw. ein geringes Ausmaß der Partikelbeladung des Filterelements festgestellt, so wird der Partikelfilter als in Ordnung befunden und nicht beanstandet. Wird hingegen ein rascher Anstieg bzw. ein hohes Ausmaß der Partikelbeladung festgestellt, so wird dies als Funktionsstörung des Partikelfilters gewertet und vorzugsweise eine entsprechende Meldung ausgegeben.

In Ausgestaltung der Erfindung sind die Beladungserfassungsmittel als Staudruckerfassungsmittel oder als Strömungswiderstandserfassungsmittel ausgelegt. Bevorzugt ist eine Ausbildung als Drucksensor oder Differenzdrucksensor, mit welchen ein eingangsseitig des Filterelements anstehender Staudruck oder ein über dem Filterelement wirksamer Differenzdruck erfasst werden kann. Da sich bei steigender Partikelbeladung des Filterelements dessen Gasdurchlässigkeit vermindert und dadurch ein erhöhter Staudruck vor dem Filterelement bzw. ein erhöhter Druckverlust über dem Filterelement auftritt, kann auf diese Weise die Partikelbeladung des Filterelements zuverlässig erfasst und bewertet werden. Somit ist eine zuverlässige Überwachung der Funktionsfähigkeit des Partikelfilters ermöglicht.

In weiterer Ausgestaltung der Erfindung beträgt die Partikelaufnahmefähigkeit des Partikelfilters ein Mehrfaches der Partikelaufnahmefähigkeit des Filterelements. Eine Zunahme der Partikelbeladung hat daher rasche Auswirkungen auf den Strömungswiderstand des Filterelements und eine Funktionsstörung des Partikelfilters kann rasch festgestellt werden. Das Filterelement kann dadurch klein und kostengünstig ausgeführt werden. Unter einer Partikelaufnahmefähigkeit wird hierbei die Menge an im Partikelfilter bzw. Filterelement angesammelten Partikeln bei einem vorgegebenen Strömungswiderstandswert bzw. einem vorgegebenen zuwachs des Strömungswiderstandswerts verstanden.

In weiterer Ausgestaltung der Erfindung beträgt der Strömungswiderstand des unbeladenen Partikelfilters ein Mehrfaches des Strömungswiderstands des unbeladenen Filterelements. Der Strömungswiderstand des Filterelements ist somit im Vergleich zu dem des Partikelfilters gering. Dadurch kann in vorteilhafter Weise ein durch das Filterelement verursachter zusätzlicher Gegendruck gering gehalten werden.

In weiterer Ausgestaltung der Erfindung ist das Filterelement an einer Stelle im Abgasstrang angeordnet, an welcher die dort auftretenden Temperaturen zumindest überwiegend geringer sind als eine für ein Abbrennen von vom Filterelement ausgefiltertem Ruß erforderliche Temperatur. Bevorzugt ist eine Anordnung an einer Stelle im Abgasstrang, an welcher die dort auftretenden Temperaturen stets geringer sind als diese Russabbrandtemperatur. Auf diese Weise ist sichergestellt, dass vom Filterelement einmal aufgenommene Rußpartikel nicht durch Oxidation entfernt werden, sondern dauerhaft im Filterelement verbleiben. Dadurch kann ein zeitlicher verlauf der Partikelfilterbeladung des Filterelements zuverlässig mit dem über der Zeit auftretenden Partikelgehalt des Abgases korreliert werden und es ist eine kontinuierliche Funktionsüberwachung des Partikelfilters gewährleistet. Vorzugsweise ist eine Anordnung des Filterelements an einer Stelle im Abgasstrang vorgesehen, an welcher die Temperatur stets unterhalb 400 °C, insbesondere unterhalb 300 °C bleibt. Das Filterelement kann daher aus einem Material gefertigt sein, für welches keine hohe Temperaturfestigkeit erforderlich ist. Somit kann das Filterelement kostengünstig ausgeführt werden.

In weiterer Ausgestaltung der Erfindung ist das Filterelement in einem dem Abgasstrang zugeordneten Endschalldämpfer angeordnet. Mit dieser Anordnung ist sichergestellt, dass ein Abbrennen von auf dem Filterelement angesammelten Rußpartikeln vermieden ist.

In weiterer Ausgestaltung der Erfindung ist das Filterelement hinsichtlich seiner Filterwirkung derart ausgelegt, dass bei einem wirkungslosen oder schadhaften Partikelfilter die Menge der hinter dem Filterelement im Abgas enthaltenen partikelförmigen Bestandteile einen Wert von etwa 100 mg je km Fahrstrecke unterschreitet. Auf diese Weise ist sichergestellt, dass auch bei einem schadhaften oder wirkungslosen Partikelfilter der Partikelgehalt des an die Umgebung abgegebenen Abgases niedrig bleibt und unerwünscht oder unzulässig hohe Werte für diese so genannte Partikelendrohremission vermieden werden.

Das erfindungsgemäße Verfahren zur Überwachung der Funktionsfähigkeit eines in einem Abgasstrang einer Brennkraftmaschine angeordneten Partikelfilters ist dadurch gekennzeichnet, dass für ein in Abgasströmungsrichtung stromab des Partikelfilters im Abgasstrang angeordnetes Filterelement eine Partikelbeladung oder eine mit der Partikelbeladung des Filterelements korrelierende Größe ermittelt wird. Dabei wird unter einer Partikelbeladung die absolute oder die auf das Filterelementvolumen bezogene Masse der im Filterelement angesammelten Partikel verstanden. Vorzugsweise wird die Partikelbeladung bzw. die damit korrelierende Größe fortlaufend ermittelt, so dass der zeitliche Verlauf der Partikelbeladung des Filterelements erfasst wird. Auf diese Weise liegt ständig ein aktueller Wert für die Partikelbeladung des Filterelements vor. Solange der Absolutwert und/oder der zeitliche Anstieg der Partikelbeladung einen vorgegebenen Grenzwert unterschreiten, ist die Partikelaufnahme des Filterelements gering und es kann von einem funktionsfähigen Partikelfilter ausgegangen werden, der mit vorgesehenem Wirkungsgrad Partikel aus dem Abgas ausfiltert. Umgekehrt wird ein schadhafter Partikelfilter diagnostiziert, wenn der Absolutwert und/oder der zeitliche Anstieg der Partikelbeladung einen vorgegebenen Grenzwert überschreiten. Somit kann durch das erfindungsgemäße Verfahren eine fortlaufende zuverlässige Funktionskontrolle des Partikelfilters erfolgen.

In Ausgestaltung des Verfahrens wird die Partikelbeladung des Filterelements oder die mit der Partikelbeladung des Filterelements korrelierende Größe aus einem stromauf des Filterelements im Abgasstrang erfassten Staudruck ermittelt. Im Filterelement angesammelte Partikel vergrößern dessen Strömungswiderstand, was einen erhöhten Staudruck zur Folge hat. Durch Erfassung des Staudrucks stromauf des Filterelements kann somit die Partikelbeladung des Filterelements ermittelt bzw. abgeschätzt werden. Vorzugsweise erfolgt eine Staudruckerfassung unmittelbar eingangsseitig des Filterelements, so dass der erfasste Staudruck unverfälscht von Fremdeinflüssen ist.

In einer nicht erfindungsgemäßen Ausgestaltung des Verfahrens wird die Partikelbeladung des Filterelements oder die mit der Partikelbeladung des Filterelements korrelierende Größe aus einem stromauf des Filterelements im Abgasstrang erfassten Luft-Kraftstoffverhältniswert oder Sauerstoffgehalt des Abgases ermittelt. Die von der Brennkraftmaschine durchgesetzte Luftmenge ist abhängig vom Abgasgegendruck, der von den im Abgasstrang angeordneten Bauelementen maßgeblich bestimmt ist. Verringert sich der Luftdurchsatz beispielsweise infolge eines erhöhten Strömungswiderstands des Filterelements, so beeinflusst dies den Luft-Kraftstoffverhältniswerts bzw. den Sauerstoffgehalt des Abgases. Umgekehrt kann aus diesen Größen auf den Abgasgegendruck und damit den Strömungswiderstand geschlossen werden. Somit kann die den Strömungswiderstand beeinflussende Partikelbeladung des Filterelements ermittelt bzw. abgeschätzt werden. Diese Vorgehensweise ist insbesondere bei einer als Dieselmotor ausgebildeten Brennkraftmaschine vorteilhaft, da hier eine überwiegend ungedrosselte Betriebsweise gegeben ist.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1: ein schematisches Blockbild einer Brennkraftmaschine in deren Abgasstrang ein zu überwachender Partikel-filter angeordnet ist und
- Fig. 2: ein zeitdiagramm mit einem schematisch dargestellten beispielhaften Verlauf für eine Partikelbeladung eines Filterelements zur Überwachung des Partikelfilters gemäß Fig. 1.

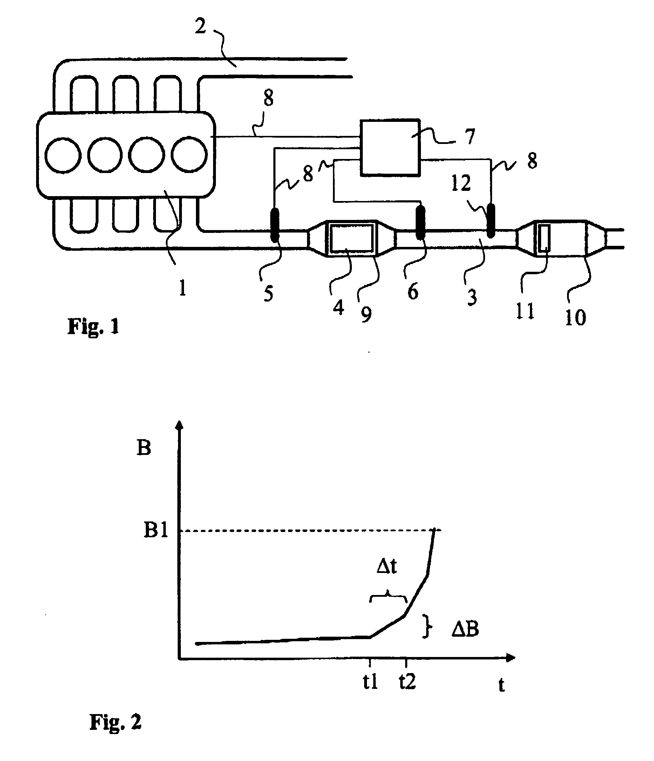

In Fig. 1 ist eine vorzugsweise als Dieselmotor ausgebildete Brennkraftmaschine 1 eines Kraftfahrzeugs skizziert, welche ihre verbrennungsluft über eine Ansaugluftleitung 2 erhält, und deren Verbrennungsabgase über einen Abgasstrang 3 einem in einem Gehäuse 9 angeordneten Partikelfilter 4 zur Ausfilterung von partikelförmigen Bestandteilen zugeführt werden. Die von Partikeln gereinigten Abgase werden einem stromab des Partikelfilters 4 angeordneten Endschalldämpfer 10 zugeführt und anschließend an die Umgebung abgegeben.

Erfindungsgemäß ist stromab des Partikelfilters 4 ein Filterelement 11 im Abgasstrang 3 angeordnet, welches analog zum Partikelfilter 4 ebenfalls partikelförmige Bestandteile aus dem Abgas ausfiltern kann. Das Filterelement 11 dient überwiegend der Überwachung der Funktionsfähigkeit des stromaufwärts angeordneten Partikelfilters 4, worauf weiter unten näher eingegangen wird. Vorzugsweise ist das Filterelement 11 wie dargestellt im Endschalldämpfer 10 angeordnet.

Für das Abgassystem der Brennkraftmaschine ist eine Abgassensorik zur Erfassung wesentlicher Abgaszustandsgrößen wie Druck, Temperatur, Sauerstoffgehalt und gegebenenfalls weiterer Größen vorgesehen. In dem in Fig. 1 dargestellten Beispiel sind eingangsseitig des Partikelfilters ein erster Drucksensor 5, eingangsseitig des Filterelements 11 ein zweiter Drucksensor 12 sowie ausgangsseitig des Partikelfilters 4 eine Lambdasonde 6 im Abgasstrang 3 angeordnet. Weitere Sensor- und Abgasreinigungskomponenten wie beispielsweise Temperatursensoren vor und nach dem Partikelfilter 4, katalytische Abgasreinigungskomponenten, wie ein Oxidationskatalysator stromauf des Partikelfilters sind vorzugsweise ebenfalls vorgesehen, jedoch der Übersichtlichkeit halber nicht dargestellt.

Zur Steuerung des Betriebs von Brennkraftmaschine 1 und Abgassystem ist ein elektronisches Steuergerät 7 vorgesehen. Das Steuergerät 7 erhält einerseits Informationen über maßgebliche Zustandsgrößen des Motors und des Abgassystems wie z.B. Drehzahl, Temperaturen, Drücke von entsprechenden Sensoren bzw. Fühlern und kann andererseits Steuersignale als Einstellgrößen an Aktuatoren wie z.B. ein AGR-Ventil oder einen Abgasturbolader (nicht dargestellt) ausgeben. Weiter ist das Steuergerät 7 in der Lage, eine Einspritzung von Kraftstoff bedarfsgerecht einzustellen. Hierfür kann das Steuergerät 7 auf abgespeicherte Kennfelder oder Berechnungsroutinen zurückgreifen. Zur Durchführung dieser Funktionen ist das Steuergerät 7 über Datenleitungen 8 mit den jeweiligen Komponenten verbunden, wobei die Datenleitungen 8 in Form von unidirektionalen oder bidirektionalen Signal- bzw. Steuerleitungen vorliegen können.

Bei normalem Betrieb der Brennkraftmaschine 1 erfolgt eine Reinigung der Abgase durch Ausfilterung von Rußpartikeln durch den Partikelfilter 4. Vorzugsweise weist der Partikelfilter 4 einen hohen Abscheidegrad von über 95 %, insbesondere von über 99 % und besonders bevorzugt von mehr als 99,5 % bezogen auf die Partikelmasse auf. Vorzugsweise ist der Partikelfilter 4 derart ausgelegt, dass der Partikelgehalt des Abgases auf weniger als 10 mg, besonders bevorzugt auf weniger als 5 mg und insbesondere auf weniger als 2 mg je km Fahrstrecke oder je kWh Motorarbeit vermindert werden kann. Der Partikelfilter 4 ist hierfür vorzugsweise als wanddurchströmter Partikelfilter in Wabenkörperbauform ausgeführt und aus SiC, Kordierit oder Aluminiumtitanat gebildet. Eine Ausführung als Sintermetallfilter oder als Tiefenfilter ist jedoch ebenfalls möglich. Schließlich ist auch eine Ausführung als elektrostatischer Partikelabscheider oder als Zyklonabscheider möglich.

Infolge der Ausfilterung von überwiegend in Form von Ruß vorliegenden Partikeln tritt im Allgemeinen eine allmählich zunehmende Rußbeladung des Partikelfilters 4 ein, so dass dieser in zunehmenden Maß verstopft und sein Strömungswiderstand ansteigt. Um den dadurch verursachten unerwünschten Abgasgegendruck wieder abzusenken, sind von Zeit zu Zeit Partikelfilterregenerationen, vorzugsweise durch thermischen Rußabbrand erforderlich. Die zeitlichen Abstände, in welchen diese Regenerationen erforderlich werden, hängen dabei maßgeblich von der Partikelbelastung des Abgases und von der Partikel-Aufnahmekapazität des Partikelfilters 4 ab. Typischerweise wird eine Partikelfilterregeneration durch thermischen Rußabbrand bei einer Rußbeladung des Partikelfilters 4 von mehreren Gramm Ruß, bezogen auf einen Liter Partikelfiltervolumen eingeleitet. Eine Ermittlung des entsprechenden Zeitpunkts kann modellbasiert durch das Steuergerät 7 erfolgen. Alternativ oder zusätzlich ist hierfür eine Auswertung der Signale des ersten und/oder zweiten Drucksensors 5, 12 vorgesehen. Bei Erreichen einer Grenzbeladung bzw. eines Grenzwertes für den durch die Partikelfilterbeladung verursachten Staudruck wird eine Partikelfilterregeneration eingeleitet. Hierfür wird beispielsweise durch motorische Maßnahmen die Temperatur des Abgases bzw. des Partikelfilters 4 derart angehoben, dass der im Partikelfilter 4 angesammelte Ruß abbrennen kann. Typischerweise werden dabei im Partikelfilter 4 Temperaturen von über 600 °C erreicht. Lokal können beispielsweise infolge der Wärmefreisetzung beim Rußabbrand auch Temperaturen von über 800 °C auftreten, was den Partikelfilter 4 entsprechend stark thermisch beansprucht.

Obschon zur Absenkung der Rußabbrandtemperatur eine Kraftstoffadditivierung und/oder für den Partikelfilter 4 eine katalytische Beschichtung vorgesehen sein können, kann es insbesondere bei der Partikelfilterregeneration zu einer Beschädigung des Partikelfilters 4 kommen, welche sich beispielsweise durch Rissbildung oder Anschmelzungen äußern kann. Als Folge hiervon kann sich wiederum die Filterwirkung bzw. der Abscheidegrad des Partikelfilters 4 mehr oder weniger stark vermindern. Mittels des erfindungsgemäß vorgesehenen Filterelements 11 kann eine derartige Störung der Funktionsfähigkeit des Partikelfilters 4 erkannt werden und außerdem eine erhöhte Abgabe von Partikeln an die Umgebung vermieden werden.

Das stromab des Partikelfilters 4 angeordnete Filterelement 11 wird von dem aus dem Partikelfilter 4 ausströmenden Abgas durchströmt. Bei einem voll funktionsfähigen Partikelfilter 4 ist der Partikelgehalt des gefilterten Abgases stark vermindert. Das Filterelement 11 wird in diesem Fall nur gering mit Partikeln beaufschlagt und belädt sich dementsprechend nur langsam mit Partikeln. Bei einem Partikelfilter 4, dessen Abscheidegrad vermindert ist, erfolgt jedoch eine raschere Beladung des Filterelements 11. Da erfindungsgemäß die Partikelbeladung des Filterelements 11 ermittelt werden kann, ist eine Überwachung der Funktionsfähigkeit des Partikelfilters 4 ermöglicht. Aufgrund der Filterwirkung des Filterelements 11 wird zudem eine übermäßige Emission von Partikeln an die Umwelt auch bei einem schadhaften Partikelfilter 4 vermieden.

Die Auslegung des Filterelements 11 orientiert sich vorzugsweise an der Filterwirkung des Partikelfilters 4. Bevorzugt ist das Filterelement 11 derart ausgeführt, dass bei einem voll funktionsfähigen Partikelfilter 4 nach einer vorgegebenen Grenzlaufstrecke des Fahrzeugs der Abgasgegendruck, gemessen bei einem mittleren Lastpunkt der Brennkraftmaschine 1, einen vorgegebenen Grenzwert unterschreitet. In einer bevorzugten Dimensionierung ist das Filterelement 11 so ausgelegt, dass der Abgasgegendruck des Filterelements 11 bei voll funktionsfähigem Partikelfilter 4 nach einer Grenzlaufstrecke von 100.000 km einen Grenzwert von 200 mbar, besonders bevorzugt von 100 mbar unterschreitet. Hierfür weist das Filterelement 11 in unbeladenem Zustand vorzugsweise weniger als 50 %, insbesondere weniger als 30 % und besonders bevorzugt weniger als 15 % des Strömungswiderstands des unbeladenen Partikelfilters 4 auf. Beeinträchtigungen des Motorbetriebs infolge eines unerwünschten zusätzlichen Abgasgegendrucks können dadurch vermieden werden.

Da das Filterelement 11 bei intaktem Partikelfilter 4 nur gering mit Partikeln beaufschlagt wird, kann es entsprechend klein ausgeführt sein. Vorzugsweise weist das Filterelement 11 ein Einbauvolumen auf, welches 50 % des Partikelfilters 4 unterschreitet. In einer besonders bevorzugtem Ausführung beträgt das Einbauvolumen des Filterelements 11 weniger als 30 % des Partikelfilters 4. Die Partikelaufnahmefähigkeit des Filterelements 11 beträgt dadurch typischerweise nur einen Bruchteil der Partikelaufnahmefähigkeit des Partikelfilters 4. Dadurch wird der Tatsache Rechnung getragen, dass das Filterelement 11 nur bei einem Filterversagen des Partikelfilters 4 größere Partikelmengen ausfiltern muss. Der Abscheidegrad des Filterelements 11 kann vergleichbar mit dem des Partikelfilters 4 ausgeführt sein. Bevorzugt ist jedoch ein geringerer Abscheidegrad von etwa 90 % oder weniger. Dadurch erhöht sich die Standzeit des Filterelements 11, wobei andererseits auch bei einem schadhaften Partikelfilter 4 noch eine gute Filterwirkung gegeben ist.

In einer besonders bevorzugten Ausgestaltung orientiert sich die Auslegung des Filterelements 11 an einer vorgegebenen Mindestfilterwirkung bei einem schadhaften oder wirkungslosen Partikelfilter 4. Es ist vorgesehen, dass das Filterelement 11 in diesem Fall den Partikelgehalt des Abgases unter 100 mg je km Fahrstrecke oder je kWh Motorarbeit vermindern kann. Vorzugsweise ist eine Verminderung auf weniger als 25 mg, insbesondere auf weniger als 5 mg je km Fahrstrecke oder je kWh Motorarbeit ermöglicht. Dadurch ist auch bei einem schadhaften oder ausgefallenen Partikelfilter 4 eine geringe Partikelemission des entsprechenden Fahrzeugs sichergestellt.

Um eine möglichst kontinuierliche Funktionsüberwachung des Partikelfilters 4 sicherzustellen, ist es vorteilhaft, wenn das Filterelement 11 derart im Abgasstrang 3 angeordnet ist, dass einmal ausgefilterte Rußpartikel im Filterelement 11 verbleiben und nicht durch thermischen Rußabbrand und/oder durch Oxidation mit N02 entfernt werden. Bevorzugt ist daher eine Anordnung an einer Stelle im Abgasstrang 3, an der das Filterelement 11 stets oder zumindest überwiegend unterhalb einer hierfür erforderlichen Temperatur von etwa 450 °C bleibt. Insbesondere ist es vorteilhaft, wenn das Filterelement 11 derart im Abgasstrang 3 angeordnet ist, dass seine Temperatur stets oder zumindest überwiegend unterhalb 300 °C, insbesondere unterhalb 250 °C liegt. Besonders bevorzugt ist ein Einbau im Endschalldämpfer, wie in Fig. 1 schematisch dargestellt. Die Anordnung des Filterelements an einer Stelle mit niedriger Temperaturbelastung hat den weiteren Vorteil, dass das Filterelement 11 aus einem Material mit einer geringeren Temperaturbeständigkeit als der Partikelfilter 4 gefertigt sein kann. Dadurch ergibt sich eine kostengünstige Ausführung, weshalb auch ein Auswechseln des Filterelements im Rahmen von turnusmäßigen Serviceintervallen von etwa 20.000 km Fahrzeuglaufstrecke vorgesehen sein kann. Vorteilhaft ist eine Ausführung des Filterelements 11 als so genanntes offenes Filter mit einer Vielzahl von frei durchströmbaren Strömungswegen mit Umlenkungen und/oder Verwirbelungs- und Beruhigungszonen Vliesmaterial. Alternativ oder ergänzend kann ein Vliessmaterial mit Filterwirkung vorgesehen sein. Selbstverständlich kann das Filterelement 11 jedoch auch analog dem Partikelfilter 4 ausgeführt sein bzw. aus dem gleichen oder einem ähnlichen Material wie der Partikelfilter 4 gefertigt sein.

Wie erläutert, erfolgt erfindungsgemäß eine Überwachung der Funktionsfähigkeit des Partikelfilters 4 durch eine Erfassung der Partikelbeladung des Filterelements 11. Dies kann beispielsweise mittels eines elektrischen Sensors erfolgen, der ein mit der Partikelbeladung korrelierendes Signal erzeugt. Vorzugsweise wird zur Erfassung der Partikelbeladung des Filterelements 11 jedoch das Signal des ersten Drucksensors 5 und/oder des zweiten Drucksensors 12 vom Steuergerät 7 ausgewertet. Vorteilhaft ist es in diesem Zusammenhang, die bei vorgegebenen Motorbetriebspunkten vorliegenden Signale auszuwerten. Vorteilhaft ist insbesondere eine Auswertung der Sensorsignale im Anschluss an eine erfolgreiche Regeneration des Partikelfilters 4, da in diesem Fall dessen Gegendruckeinfluss gering ist. Es kann jedoch auch eine kontinuierliche oder quasi-kontinuierliche Auswertung vorgesehen sein, bei welcher unter Berücksichtigung des dem Steuergerät 7 bekannten Abgasmassenstroms und der Abgastemperatur ein mit der Partikelbeladung korrelierender Strömungswiderstandswert des Filterelements 11 ermittelt wird.

Nachfolgend wird anhand eines in Fig. 2 dargestellten Zeitdiagramms eine vorteilhafte Vorgehensweise bei der Funktionsüberwachung des Partikelfilters 4 erläutert. Im Diagramm der Fig. 2 ist hierfür ein beispielhafter Verlauf der ermittelten Partikelbeladung B des Filterelements 11 in Abhängigkeit von der Zeit t dargestellt. Zur Beurteilung der Funktionsüberwachung des Partikelfilters 4 wird bevorzugt der Absolutwert der erfassten Partikelbeladung B und/oder deren zeitlicher Anstieg ΔB/Δt ausgewertet. Wie aus dem Kurvenverlauf ersichtlich, steigt die Partikelbeladung B bis zum Zeitpunkt t1 lediglich in geringem Maß an und weist zudem niedrige Werte auf. Die Funktion des Partikelfilters wird in diesem Fall als ordnungsgemäß bewertet. Ab dem Zeitpunkt t1 ergibt sich ein stärkerer zeitlicher Anstieg ΔB/Δt der Partikelbeladung B, was auf einen verminderten Abscheidegrad des Partikelfilters 4 zurückgeführt werden kann. Vorzugsweise wird der ermittelte Anstieg ΔB/Δt mit einem vorgegebenen Grenzwert verglichen und bei einem Überschreiten des Grenzwerts eine Fehlermeldung betreffend einer Fehlfunktion des Partikelfilters 4 ausgegeben. Analog kann zusätzlich oder alternativ eine Fehlermeldung ausgegeben werden, wenn der Absolutwert der Partikelbeladung B einen Schwellenwert B1 erreicht bzw. überschreitet. Selbstverständlich kann die analoge Vorgehensweise auch für eine mit der Partikelbeladung B des Filterelements korrelierende Größe vorgesehen sein.

Aus Sicherheitsgründen ist es vorteilhaft, einen dem Partikelfilter 4 und/oder dem Filterelement 11 zugeordneten Bypass vorzusehen, der bei Überschreitung eines Grenzwerts für den vom Partikelfilter 4 bzw. vom Filterelement 11 verursachten Staudruck bzw. den Strömungswiderstand öffnet und dann Abgas um den Partikelfilter 4 und/oder das Filterelement 11 herum leitet.

## Patentansprüche

1. Vorrichtung zur Überwachung der Funktionsfähigkeit eines in einem Abgasstrang (3) einer Brennkraftmaschine (1) angeordneten Partikelfilters (4), wobei die Vorrichtung ein Filterelement (11) umfasst, welches in Abgasströmungsrichtung stromab des Partikelfilters (4) im Abgasstrang (3) angeordnet ist und von aus dem Partikelfilter (3) ausströmendem Abgas durchströmt werden kann, und Beladungserfassungsmittel zur Erfassung einer Partikelbeladung (B) des Filterelements (11) vorgesehen sind,
**dadurch gekennzeichnet, dass**
die Beladungserfassungsmittel als Staudruckerfassungsmittel oder als Strömungswiderstandserfassungsmittel ausgelegt sind.

2. Vorrichtung nach Anspruch 1,
**dadurch gekennzeichnet, dass**
das Filterelement (11) vom gesamten, aus dem Partikelfilter (3) ausströmenden Abgas durchströmt wird.

3. Vorrichtung nach Anspruch 1 oder 2,
**dadurch gekennzeichnet, dass**
die Partikelaufnahmefähigkeit des Partikelfilters (4) ein Mehrfaches der Partikelaufnahmefähigkeit des Filterelements (11) beträgt.

4. Vorrichtung nach Anspruch 1 oder 3,
**dadurch gekennzeichnet, dass**
der Strömungswiderstand des unbeladenen Partikelfilters (4) ein Mehrfaches des Strömungswiderstands des unbeladenen Filterelements (11) beträgt.

5. Vorrichtung nach einem der Ansprüche 1 bis 4,
**dadurch gekennzeichnet, dass**
das Filterelement (11) an einer Stelle im Abgasstrang (3) angeordnet ist, an welcher die dort auftretenden Temperaturen zumindest überwiegend geringer sind als eine für ein Abbrennen von vom Filterelement (11) ausgefiltertem Ruß erforderliche Temperatur.

6. Vorrichtung nach Anspruch 5,
**dadurch gekennzeichnet, dass**
das Filterelement (11) in einem dem Abgasstrang (3) zugeordneten Endschalldämpfer (10) angeordnet ist.

7. Vorrichtung nach einem der Ansprüche 1 bis 6,
**dadurch gekennzeichnet, dass**
das Filterelement (11) hinsichtlich seiner Filterwirkung derart ausgelegt ist, dass bei einem wirkungslosen oder schadhaften Partikelfilter (4) die Menge der hinter dem Filterelement (11) im Abgas enthaltenen partikelförmigen Bestandteile einen Wert von etwa 100 mg je km Fahrstrecke unterschreitet.

8. Verfahren zur Überwachung der Funktionsfähigkeit eines in einem Abgasstrang (3) einer Brennkraftmaschine 1 angeordneten Partikelfilters (4), bei welchem für ein in Abgasströmungsrichtung stromab des Partikelfilter (4) im Abgasstrang (3) angeordnetes Filterelement (11) eine Partikelbeladung oder eine mit der Partikelbeladung des Filterelements (11) korrelierende Größe ermittelt wird,
**dadurch gekennzeichnet, dass**
die Partikelbeladung des Filterelements (11) oder die mit der Partikelbeladung des Filterelements (11) korrelierende Größe aus einem stromauf des Filterelements (11) im Abgasstrang 3 erfassten Staudruck ermittelt wird.

9. Verfahren nach Anspruch 8,
**dadurch gekennzeichnet, dass**
das Filterelement (11) vom gesamten, aus dem Partikelfilter (3) ausströmenden Abgas durchströmt wird.

## Claims

1. Device for monitoring the functionality of a particulate filter (4) in an exhaust train (3) of an internal combustion engine (1), wherein the device comprises a filter element (11) which is located in the exhaust train (3) downstream of the particulate filter (4) in the direction of exhaust gas flow and through which exhaust gas discharged from the particulate filter (3) can flow, and wherein loading detection means for detecting a particulate load (B) of the filter element (11) are provided,
**characterised in that**
the loading detection means are designed as backpressure detection means or as flow resistance detection means.

2. Device according to claim 1,
**characterised in that**
all of the exhaust gas discharged from the particulate filter (3) flows through the filter element (11).

3. Device according to claim 1 or 2,
**characterised in that**
the particulate capacity of the particulate filter (4) is a multiple of the particulate capacity of the filter element (11).

4. Device according to claim 1 or 3,
**characterised in that**
the flow resistance of the unloaded particulate filter (4) is a multiple of the flow resistance of the unloaded filter element (11).

5. Device according to any of claims 1 to 4,
**characterised in that**
the filter element (11) is situated at a point in the exhaust train (3) where the prevailing temperatures are at least largely lower than a temperature required for burning off particulates filtered out by the filter element (11).

6. Device according to claim 5,
**characterised in that**
the filter element (11) is situated in a tailpipe silencer (10) assigned to the exhaust train (3).

7. Device according to any of claims 1 to 6,
**characterised in that**
the filter element is, in terms of its filter action, designed such that, if the particulate filter (4) is defective or ineffective, the amount of particulate components contained in the exhaust gas downstream of the filter element (11) falls below a value of approximately 100 mg per km travel distance.

8. Method for monitoring the functionality of a particulate filter (4) in an exhaust train (3) of an internal combustion engine (1), wherein a particulate load or a variable correlating with the particulate load of the filter element (11) is determined for a filter element (11) which is located in the exhaust train (3) downstream of the particulate filter (4) in the direction of exhaust gas flow,
**characterised in that**
the particulate load of the filter element (11) or the variable correlating with the particulate load of the filter element (11) is determined from a backpressure detected in the exhaust train (3) upstream of the filter element (11).

9. Method according to claim 8,
**characterised in that**
all of the exhaust gas discharged from the particulate filter (3) flows through the filter element (11).

## Revendications

1. Dispositif destiné à la surveillance de la fonctionnalité d'un filtre à particules (4) disposé dans une voie de gaz d'échappement (3) d'un moteur à combustion interne (1), le dispositif comprenant un élément de filtre (11) qui est monté dans la direction d'écoulement des gaz d'échappement en aval du filtre à particules (4) dans la ligne de gaz d'échappement (3) et qui peut être parcouru par les gaz d'échappement sortant du filtre à particules (3), et sont prévus des moyens de détection de charge servant à détecter une charge en particule (B) de l'élément de filtre (11), **caractérisé en ce que** les moyens de détection de charge sont conçus comme des moyens de détection de pression dynamique ou comme des moyens de détection de la résistance à l'écoulement.

2. Dispositif selon la revendication 1, **caractérisé en ce que** l'élément (11) filtrant est parcouru par la totalité des gaz d'échappement sortant du filtre (3) à particules.

3. Dispositif selon la revendication 1 ou 2, **caractérisé en ce que** la capacité de contenance de particules du filtre (4) à particules est un multiple de la capacité de contenance de particules de l'élément (11) filtrant.

4. Dispositif selon la revendication 1 ou 3, **caractérisé en ce que** la résistance à l'écoulement du filtre (4) à particules non chargé est un multiple de la résistance à l'écoulement de l'élément (11) filtrant non chargé.

5. Dispositif selon l'une quelconque des revendications de 1 à 4, **caractérisé en ce que** l'élément (11) filtrant est disposé à un emplacement dans la ligne (3) de gaz d'échappement là où les températures sont au moins pour la plupart inférieures à une température nécessaire pour brûler la suie extraite par filtration par l'élément (11) filtrant.

6. Dispositif selon la revendication 5, **caractérisé en ce que** l'élément (11) filtrant est disposé dans un silencieux (10) arrière affecté à la ligne de gaz d'échappement (3).

7. Dispositif selon l'une quelconque des revendications de 1 à 6, **caractérisé en ce que** l'élément (11) filtrant en ce qui concerne son effet filtrant est conçu de telle sorte qu'en cas de filtre (4) à particules défectueux ou inefficace, la quantité des composants en forme de particule contenus dans les gaz d'échappement derrière l'élément (11) filtrant soit inférieure à environ 100 mg par km parcouru.

8. Procédé destiné à la surveillance de la fonctionnalité d'un filtre (4) à particules disposé dans une ligne (3) de gaz d'échappement d'un moteur à combustion interne (1), selon lequel pour un élément (11) filtrant monté dans la direction d'écoulement des gaz d'échappement en aval du filtre (4) à particules dans la ligne de gaz d'échappement (3) une charge particulaire ou une grandeur en corrélation avec la charge particulaire de l'élément (11) filtrant est déterminée, **caractérisé en ce que** la charge particulaire de l'élément (11) filtrant ou la grandeur en corrélation avec la charge particulaire de l'élément (11) filtrant est déterminée à partir d'une pression dynamique détectée dans la ligne (3) de gaz d'échappement en amont de l'élément (11) filtrant.

9. Procédé selon la revendication 8, **caractérisé en ce que** l'élément (11) filtrant est parcouru par la totalité des gaz d'échappement sortant du filtre (3) à particules.
